# EUROPEAN PATENT SPECIFICATION

(11) **EP 3 066 313 B1**
(45) Date of publication and mention of the grant of the patent: **20.12.2017**
(21) Application number: 14802701.4
(22) Date of filing: 13.10.2014
(51) Int. Cl.: F02B 29/04, F02B 37/013, F01M 5/00

(54) **METHOD FOR OPERATING AN INTERNAL COMBUSTION ENGINE**
VERFAHREN ZUM BETRIEB EINES VERBRENNUNGSMOTORS
PROCÉDÉ DE FONCTIONNEMENT D'UN MOTEUR À COMBUSTION INTERNE

(30) Priority: 16.10.2013 FI 20136024
(43) Date of publication of application: 14.09.2016
(73) Proprietor: Wärtsilä Finland Oy, 65380 Vaasa (FI)
(72) Inventor: WESTERLUND, Andreas, FI-Vaasa 65100 (FI); BJÖRKLUND, Matias, FI-Vaasa 65100 (FI); HJORT, Andreas, FI-Vaasa 65100 (FI)
(74) Representative: Berggren Oy, Helsinki & Oulu
(86) International application number: PCT/FI2014/050773
(87) International publication number: WO 2015/055891

(56) References cited:
- EP-A2- 2 213 859
- WO-A1-97/13968
- WO-A1-2011/073512
- WO-A2-2007/054330
- US-A1- 2008 264 359

## Description

### TECHNICAL FIELD

The present invention relates to a method for operating a turbocharged internal combustion engine, which comprises a cooling liquid circuit for engine cooling liquid, in which method
- charge air is pressurised at a turbo charger,
- the pressurised charge air is cooled by a charge air cooler,
- a dew point of the pressurised charge air downstream of the charge air cooler is defined, and
- the temperature of the charge air leaving the charge air cooler is adjusted to be higher than the dew point by controlling temperature of the cooling liquid fed into the charge air cooler,
- lubrication oil for engine lubrication in a lubrication oil circuit is cooled by a lubrication oil cooler.

### BACKGROUND OF THE INVENTION

In turbocharged internal combustion piston engines the pressure of the charge air is increased at least in one stage by a compressor. After the compressor, the pressurised charge air is typically cooled by a charge air cooler. If charge air pressure, temperature and humidity are at a certain level, water vapour in charge air condenses into water. Condense (water droplets, mist) may cause corrosion and erosion to the engine components, e.g. turbocharger compressor impeller (in 2-stage turbocharging), charge air receiver, inlet channels and inlet valves. The amount of condense can be high especially on high pressure side of the charge air system if the humidity of the intake air is high. The dew point is the temperature where water vapour condenses into liquid water.

With two stage turbo charged engines, the boost pressure is high and also the temperature of charged air is high. This causes some challenges for the cooling water system design and control: The charge air cooling need is high compared to a single stage turbo charged engine. The combustion air or receiver air, or charge air as it is called here, temperature must be kept low for avoiding knock in certain engine types. Especially in dry conditions cold charge air is needed. Correspondingly humid conditions increases the knock margin and thus higher receiver air temp can be allowed in humid conditions. Also the lubrication oil temperature must be kept within limits for safe operation of the engine.

It is known from the state of art a document WO 2001/073512 disclosing a method of operating a turbocharged piston engine, which comprises a low-temperature cooling circuit for low-temperature cooling liquid, a high-temperature cooling circuit for high-temperature cooling liquid, and a charge air cooler connected to the low-temperature cooling circuit. In the method charge air is pressurised at least in one stage, the pressurised charge air is cooled by the charge air cooler into which low-temperature cooling liquid is fed, a dew point of the pressurised charge air downstream of the charge air cooler is defined, and temperature of the charge air leaving the charge air cooler is adjusted to be higher than the dew point by controlling temperature of the low-temperature cooling liquid fed into the charge air cooler. The temperature of the low-temperature cooling liquid is controlled by adding high-temperature cooling liquid thereto.

### SUMMARY OF THE INVENTION

The objective of the present invention is to improve further the control of the charge air in a turbo charged engine, especially in a two stage turbo charged engine.

The present invention comprises a method wherein there are provided at least two lubrication oil coolers which are configured to the cooling liquid circuit so that one lubrication oil cooler is connected to an upstream position in relation to the charge air cooler and one lubrication oil cooler is connected to a downstream position in relation to the charge air cooler, the temperature of the charge air after said charge air cooler is kept higher than corresponding dew point and the temperature of the lubrication oil is kept within an operational range by controlling the heat exchange power of said lubrication oil coolers.

Clear benefits can be achieved by means of the invention. The amount of condense in the charge air system can be reduced, which in turn reduces corrosion and erosion damages of the engine components. Also the controllability of the engine lubrication oil and cooling liquid is improved, it is easier to ensure that the temperature of the returning lubrication oil is at optimum range. A term excess heat is used within this description to describe the amount of heat or heating power causing a rise of temperature of the relevant medium above the target or wanted temperature range.

### BRIEF DESCRIPTION OF DRAWINGS

In the following the invention will be described with the reference to the accompanying drawings where
Fig. 1 presents a general schematic view of the present piston engine,
Fig 2. presents an embodiment of the present piston engine schematic,
Fig 3. present another embodiment of the present piston engine schematic,
Figs. 4 to 13 presents different alternatives to arrange the lubrication oil circuit and the cooling liquid circuit in respect to each others.

### DETAILED DESCRIPTION

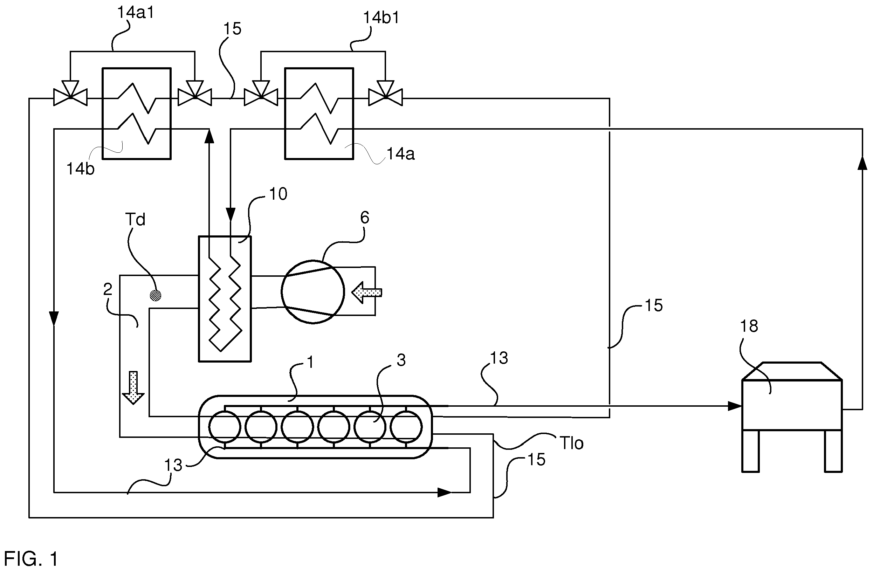

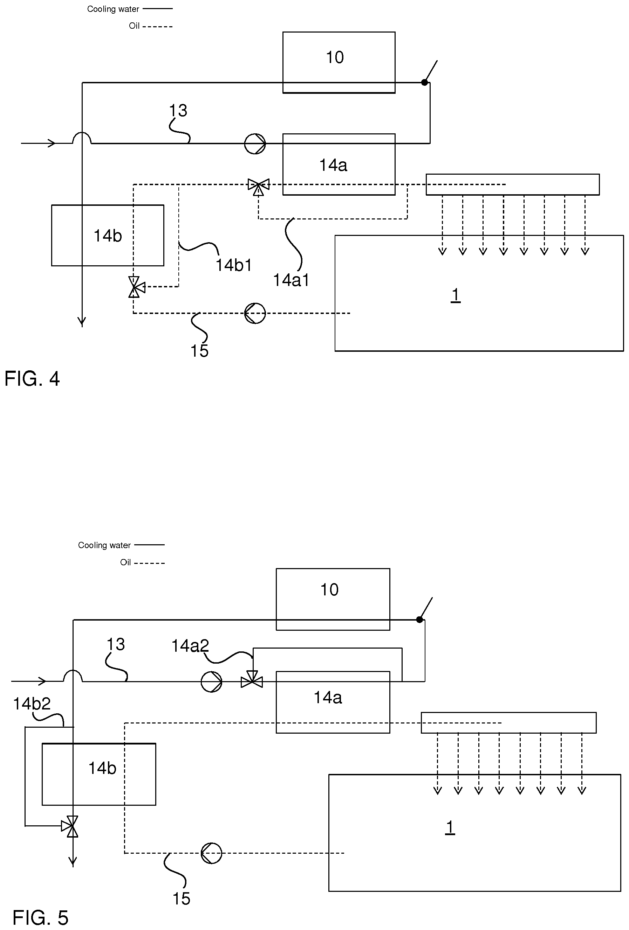

Figure 1 is a schematic view of the piston engine 1. The engine 1 comprises in that embodiment one turbocharger compressor 6. The engine 1 is a reciprocating internal combustion comprising multiple cylinders 3. The engine is used, for example, as main and auxiliary engines in ships and in power plants. The method of operating this turbocharged internal combustion engine 1, which comprises a cooling liquid circuit 13 for engine 1 cooling liquid, is the following:
- charge air in an inlet channel 2 is pressurised at a turbo charger 6,
- the pressurised charge air is cooled by a charge air cooler 10,
- a dew point Td of the pressurised charge air downstream of the charge air cooler 10 is defined, and
- the temperature of the charge air leaving the charge air cooler 10 is adjusted to be higher than the dew point Td by controlling temperature of the cooling liquid fed into the charge air cooler 10,
- lubrication oil for engine lubrication in a lubrication oil circuit 15 is cooled by a lubrication oil cooler 14a, 14b,
- there are provided at least two lubrication oil coolers 14a, 14b which are configured to the cooling liquid circuit 13 so that one lubrication oil cooler 14a is connected to an upstream position in relation to the charge air cooler 11 and one lubrication oil cooler 14b is connected to a downstream position in relation to the charge air cooler 10, the temperature of the charge air after said charge air cooler 10 is kept higher than corresponding dew point Td and the temperature of the lubrication oil is kept within an operational range Tlo by controlling the heat exchange power of said lubrication oil coolers 14a, 14b. The cooling liquid is conducted through a radiator 18 (when needed) to remove the excess heat from the cooling liquid, and then the cooling liquid is returned to the circulation 13. In the Figs. 1 to 3 it is not presented a direction of circulation for lubrication oil in the lubrication oil circuit 15 because it can be arranged according to different alternatives which are presented in more detail in Figs. 4 to 13. The operational range Tlo of the lubrication oil temperature means the temperature of the lubrication oil by an inlet of engine, shown only schematically in the figures.

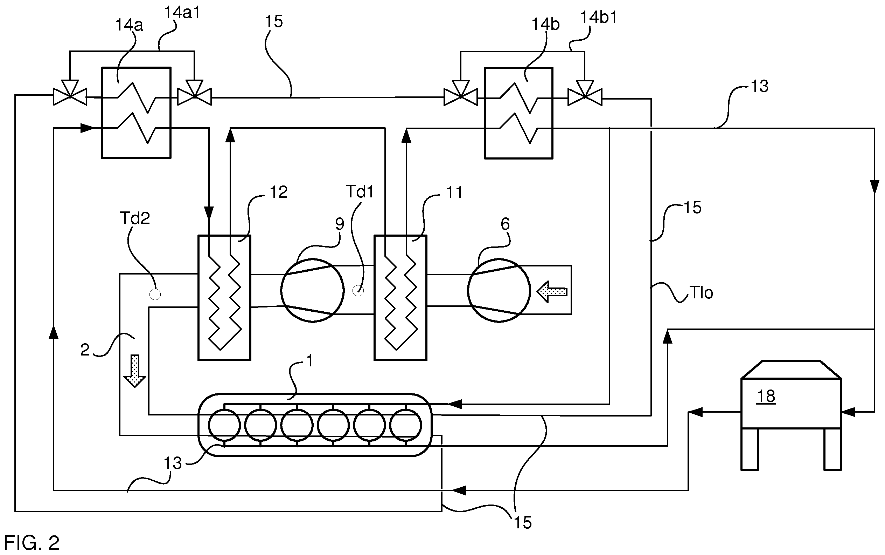

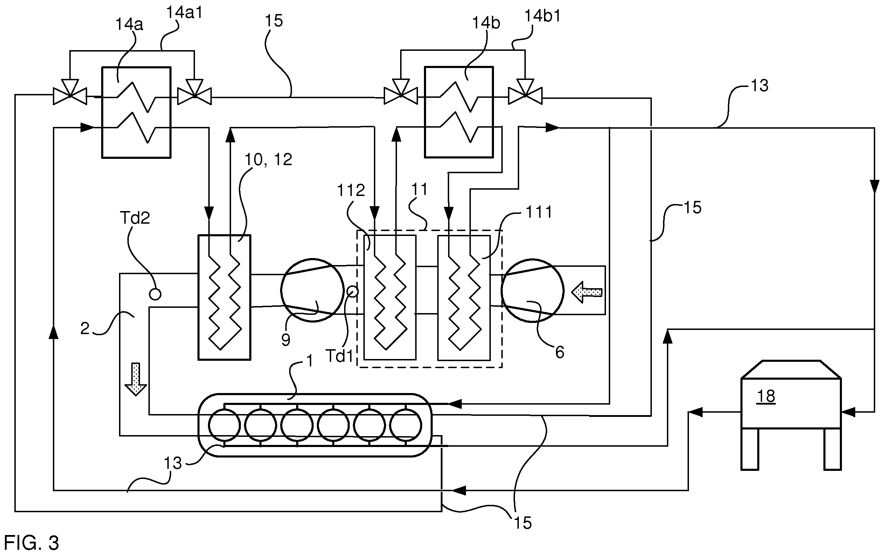

The dew point Td (or Td1, Td2 in figures 2 and 3) of the charge air is defined on the basis of the measurements of charge air pressure, temperature and humidity. There are many options to do this in practise, but these are not explained here in more detail.

In Fig. 2 it is presented an embodiment of the invention wherein.
- charge air is pressurised at a first stage by a low pressure turbo charger 6,
- the charge air pressurised at the first stage is cooled by a low pressure charge air cooler 11
- a first dew point Td1 of the pressurised charge air downstream of the low pressure charge air cooler 11 is defined, and
- the temperature of the charge air leaving the low pressure charge air cooler 11 is adjusted to be higher than the first dew point Td1 by controlling temperature of the cooling liquid fed into the low pressure charge air cooler 11,
- charge air is pressurised at a second stage by a high pressure turbo charger 9,
- the charge air pressurised at the second stage is cooled by a high pressure charge air cooler 12,
- a second dew point Td2 of the pressurised charge air downstream of the high pressure charge air cooler 12 is defined, and
- the temperature of the charge air leaving the high pressure charge air cooler 12 is adjusted to be higher than the second dew point Td2 by controlling temperature of the cooling liquid fed into the high pressure charge air cooler 12,
- there are provided at least two lubrication oil coolers 14a, 14b which are configured to the cooling liquid circuit 13 so that one lubrication oil cooler 14a is connected to an upstream position in relation to the high pressure charge air cooler 12 and one lubrication oil cooler 14b is connected to a downstream position in relation to the low pressure charge air cooler 11, the temperatures of the charge air after said low pressure charge air cooler 11 and after said high pressure charge air cooler 12 are kept higher than corresponding dew points Td1, Td2 and the temperature of the lubrication oil is kept within an operational range Tlo by controlling the heat exchange power of said lubrication oil coolers 14a, 14b. This enables safe operation of the engine by having means for keeping the relevant temperatures within safe and well functioning ranges. The heat exchange power means the power or rate of heat transfer at the heat exchanger, so basically the amount of heat transfered per time unit.

The embodiments of Fig. 1 and Fig. 2 presents a configuration, where the excess heat of lubrication oil, or more precisely the heat exchange power is divided between said lubrication oil coolers 14a, 14b. This can be done for example so that the heat exchange power of at least one of the lubrication oil coolers 14a, 14b is controllable by adjusting the flow of lubrication oil throught a bypass channel 14a1, 14b1. The adjustment of flow through the bypass channel 14a1, 14b1 or through the heat exchanger 14a, 14b can be done with a valve connected to said bypass channel or intersection of the line to the heat exchanger and the bypass channel. When the lubrication oil runs throught the bypass channel the flow through the heat exchanger diminishes. This causes the amount of heat transfered from a circuit to another to diminish, so the fluid inlet and outlet temperatures are more close to each others, thus the heat exchange power in that particular bypassed (or partially bypassed) heat exchanger is smaller. So for example if the valve in connection with bypass channel 14a1 is opened, the heat exchanger 14a receives less lubrication oil and therefore the heat exchange power is smaller. In general a bypass channel can be arraged to a primary circuit or to a secondary circuit of a heat exchanger. This means that the bypass channel can be at the lubrication oil circuit 15 or at the cooling liquid circuit 13 of the lubrication oil cooler 14a, 14b to control the heat exchange power of said lubrication oil cooler.

In Fig. 3 it is presented a further embodiment having most of the features the same with the embodiment of Fig. 2, but in addition the low pressure charge air cooler 11 is divided in two stages, stage one 111 and stage two 112. This enables even more precise adjustment of heat exchange power or heat transfer between the three fluids: the charge air, the lubrication oil and the cooling liquid.

The lubrication oil coolers 14a, 14b are configurable to at least three basic mode alternatives which can be selected based on initial charge air properties, one for cold charge air, one for hot and dry charge air and one for hot and moist charge air. Basically this can be done with the embodiments of Fig. 1, Fig. 2 and Fig. 3, but the embodiment of Fig. 3 gives the more advanced tools to perform the task. In the following the three ambient air property dependent configurations are explained in more detail.

The mode for cold charge air comprises a configuration where the lubrication oil cooler 14b is in the cooling liquid circuit 13 at the position downstream of the low pressure charge air cooler 11, 112 and where the excess heat of lubrication oil is transfered to the cooling liquid.

The mode for hot and dry charge air comprises a configuration where the lubrication oil cooler 14b is in the cooling liquid circuit 13 at the position downstream of a stage two of low pressure charge air cooler 11, 112 where the majority of excess heat of lubrication oil is transfered to the cooling liquid, the majority of excess low pressure charge air heat is transfered at a stage one of low pressure charge air cooler 111 to the cooling liquid circuit.

The mode for hot and humid charge air comprises a configuration where one lubrication oil cooler 14b is in the cooling liquid circuit 13 at the position downstream of a stage two of low pressure charge air cooler 112 where a major part of excess heat of lubrication oil is transfered to the cooling liquid and a minor part of excess heat of lubrication oil is transfered to the cooling liquid at a second lubrication oil cooler 14a, which is connected in the cooling liquid circuit 13 at a position upstream of high pressure charge air cooler 12, a major part of low pressure charge air excess heat is transfered at a stage one of low pressure charge air cooler 111 to the cooling liquid circuit 13.

In figures 4 to 13 there are schematically presented several embodiments to configure the lubrication oil coolers 14a, 14b, bypasses 14a1, 14a2, 14b1, 14b2, charge air cooler 10, engine 1, cooling liquid circuit 13 and lubrication oil circuit 15. Here they are shortly noted:
- Fig 4: lubrication oil bypass 14a1, 14b1 for both lubrication oil coolers 14a, 14b,
- Fig. 5: cooling liquid bypass 14a2, 14b2 for both lubrication oil coolers 14a, 14b.

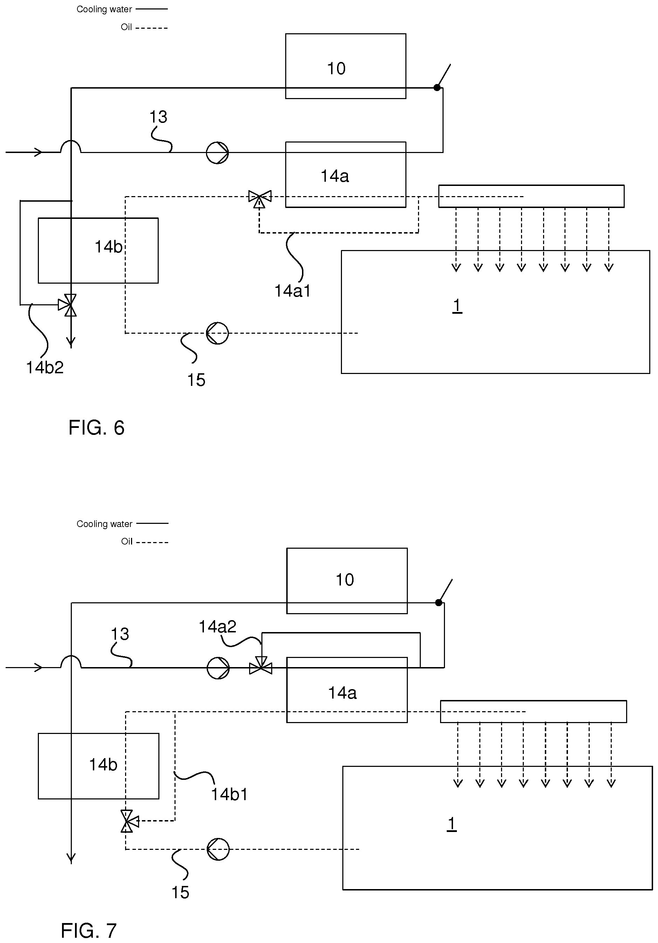

- Fig 6: lubrication oil bypass 14a1 for lubrication oil cooler 14a and cooling liquid bypass 14b2 for lubrication oil cooler 14b.
- Fig. 7: cooling liquid bypass 14a2 for lubrication oil cooler 14 and lubrication oil bypass 14b1 for lubrication oil cooler 14b.

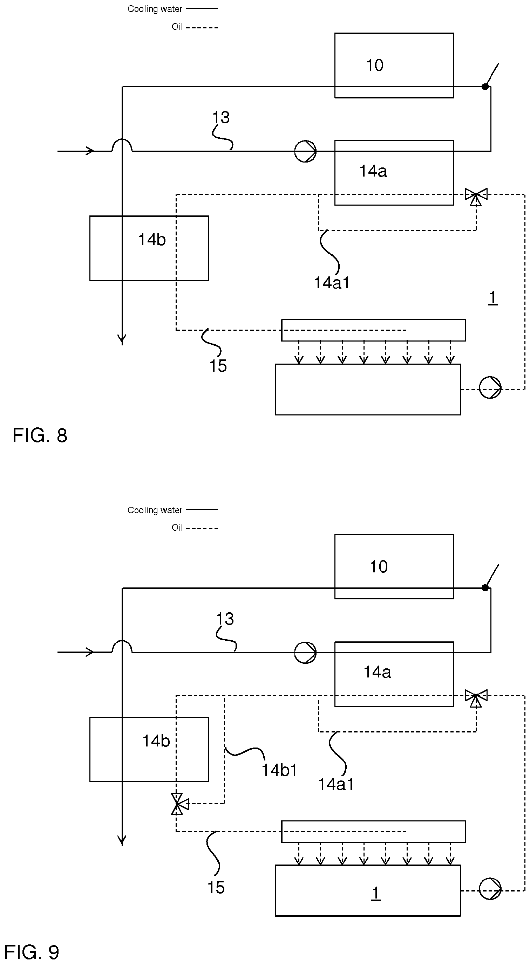

   In Fig. 8 to Fig. 13 the direction of circulation of lubrication oil is reversed in relation to Fig. 4. to Fig. 7.
- Fig. 8: lubrication oil bypass 14a1 for lubrication oil cooler 14a.
- Fig. 9: lubrication oil bypass 14a1, 14b1 for both lubrication oil coolers 14a, 14b.

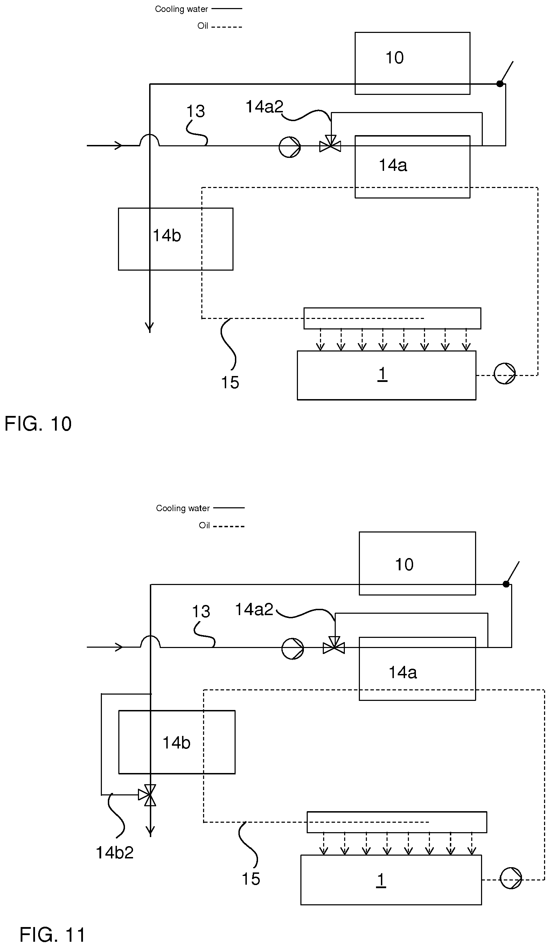

- Fig. 10: cooling liquid bypass 14a2 for lubrication oil cooler 14a.
- Fig. 11: cooling liquid bypass 14a2, 14b2 for both lubrication oil coolers 14a, 14b.

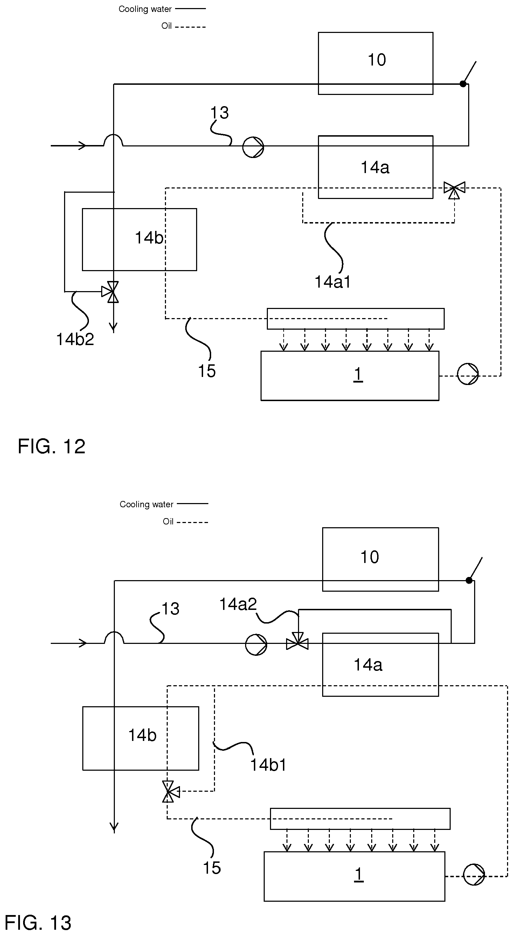

- Fig. 12: lubrication oil bypass 14a1 for lubrication oil cooler 14a and cooling liquid bypass 14b2 for lubrication oil cooler 14b.
- Fig. 13: cooling liquid bypass 14a2 for lubrication oil cooler 14a and lubrication oil bypass 14b1 for lubrication oil cooler 14b.
Basically the presented embodiments are quite equal in controllability, but it depends more about other factors and the engine / powerplant layout or design and such which is in practise the most attractive option.

For the purpose of advanced controllability the heat exchangers are advantageously reasonable oversized so that the bypass channels can be used effectively. If the heat exchangers are just in the limit of the capacity, the effect of a bypass channel is somewhat deteriorated.

As evident to those skilled in the art, the invention and its embodiments are not limited to the above-described embodiment examples.

### Reference signs in Figures:

- 1: engine
- 2: inlet channel
- 3: cylinders
- 4: exhaust channel
- 6: turbo charger, low pressure turbo charger (compressor)
- 9: high pressure turbo charger (compressor)
- 10: charge air cooler
- 11: low pressure charge air cooler
- 111: stage one of low pressure charge air cooler
- 112: stage two of low pressure charge air cooler
- Td1: first dew point
- 12: high pressure charge air cooler
- Td2: second dew point
- 13: cooling liquid circuit
- 14a: lubrication oil cooler
- 14a1: lubrication oil cooler bypass (oil)
- 14a2: lubrication oil cooler bypass (cooling liquid)
- 14b: lubrication oil cooler
- 14b1: lubrication oil cooler bypass (oil)
- 14b2: lubrication oil cooler bypass (cooling liquid)
- 15: lubrication oil circuit
- 18: heat exchanger, radiator

## Claims

1. Method for operating a turbocharged internal combustion engine (1), which comprises a cooling liquid circuit (13) for engine (1) cooling liquid, in which method
- charge air is pressurised at a turbo charger (6),
- the pressurised charge air is cooled by a charge air cooler (10),
- a dew point (Td) of the pressurised charge air downstream of the charge air cooler (10) is defined, and
- the temperature of the charge air leaving the charge air cooler (10) is adjusted to be higher than the dew point (Td) by controlling temperature of the cooling liquid fed into the charge air cooler (10),
- lubrication oil for engine lubrication in a lubrication oil circuit (15) is cooled by a lubrication oil cooler (14a, 14b),
**characterised in that**
- there are provided at least two lubrication oil coolers (14a, 14b) which are configured to the cooling liquid circuit (13) so that one lubrication oil cooler (14a) is connected to a upstream position in relation to the charge air cooler (11) and one lubrication oil cooler (14b) is connected to a downstream position in relation to the charge air cooler (10), the temperature of the charge air after said charge air cooler (10) is kept higher than corresponding dew point (Td) and the temperature of the lubrication oil is kept within an operational range (Tlo) by controlling the heat exchange power of said lubrication oil coolers (14a, 14b).

2. Method according to claim 1, wherein,
- charge air is pressurised at a first stage by a low pressure turbo charger (6),
- the charge air pressurised at the first stage is cooled by a low pressure charge air cooler (11, 111, 112),
- a first dew point (Td1) of the pressurised charge air downstream of the low pressure charge air cooler (11, 111, 112) is defined, and
- the temperature of the charge air leaving the low pressure charge air cooler (11, 111, 112) is adjusted to be higher than the first dew point by controlling temperature of the cooling liquid fed into the low pressure charge air cooler (11, 111, 112),
- charge air is pressurised at a second stage by a high pressure turbo charger (9),
- the charge air pressurised at the second stage is cooled by a high pressure charge air cooler (12),
- a second dew point (Td2) of the pressurised charge air downstream of the high pressure charge air cooler (12) is defined, and
- the temperature of the charge air leaving the high pressure charge air cooler (12) is adjusted to be higher than the second dew point (Td2) by controlling temperature of the cooling liquid fed into the high pressure charge air cooler (12),
- there are provided at least two lubrication oil coolers (14a, 14b) which are configured to the cooling liquid circuit (13) so that one lubrication oil cooler (14a) is connected to an upstream position in relation to the high pressure charge air cooler (12) and one lubrication oil cooler (14b) is connected to a downstream position in relation to the low pressure charge air cooler (11, 111, 112), the temperatures of the charge air after said low pressure charge air cooler (11, 111, 112) and after said high pressure charge air cooler (12) are kept higher than corresponding dew points (Td1, Td2) and the temperature of the lubrication oil is kept within an operational range (Tlo) by controlling the heat exchange power of said lubrication oil coolers (14a, 14b).

3. Method according to claim 1, **characterised in that** said heat exchange power is divided between said lubrication oil coolers (14a, 14b).

4. Method according to claim 1 or 2, **characterised in that** the heat exchange power of at least one of the lubrication oil coolers (14a, 14b) is controllable by adjusting the flow of lubrication oil throught a bypass channel (14a1, 14b1).

5. Method according to claims 1-3, **characterised in that** the heat exchange power of at least one of the lubrication oil coolers (14a, 14b) is controllable by adjusting the flow of cooling liquid throught a bypass channel (14a2, 14b2).

6. Method according to claim 1 **characterised in that** the lubrication oil coolers (14a, 14b) are configurable to at least three basic alternatives which can be selected based on initial charge air properties, one for cold charge air, one for hot and dry charge air and one for hot and moist charge air.

7. Method according to claim 5, **characterised in that** the alternative for cold charge air comprises a configuration where the lubrication oil cooler (14b) is in the cooling liquid circuit (13) at the position downstream of the low pressure charge air cooler (11, 112) and where the excess heat of lubrication oil is transfered to the cooling liquid.

8. Method according to claim 5, **characterised in that** the low pressure charge air cooler is divided in two stages.

9. Method according to claim 6, **characterised in that** the alternative for hot and dry charge air comprises a configuration where the lubrication oil cooler (14b) is in the cooling liquid circuit (13) at the position downstream of a stage two of low pressure charge air cooler (11, 112) where the majority of excess heat of lubrication oil is transfered to the cooling liquid, the majority of excess low pressure charge air heat is transfered at a stage one of low pressure charge air cooler (111) to the cooling liquid circuit.

10. Method according to claim 6, **characterised in that** the alternative for hot and humid charge air comprises a configuration where one lubrication oil cooler (14b) is in the cooling liquid circuit (13) at the position downstream of a stage two of low pressure charge air cooler (112) where a major part of excess heat of lubrication oil is transfered to the cooling liquid and a minor part of excess heat of lubrication oil is transfered to the cooling liquid at a second lubrication oil cooler (14a), which is connected in the cooling liquid circuit (13) at a position upstream of high pressure charge air cooler (12), a major part of low pressure charge air excess heat is transfered at a stage one of low pressure charge air cooler (111) to the cooling liquid circuit (13).

11. Method according to claim 2, **characterised in that** the dew point (Td, Td1, Td2) of the charge air is defined on the basis of the measurements of charge air pressure, temperature and humidity.

## Patentansprüche

1. Verfahren zum Betätigen eines turboaufgeladenen Verbrennungsmotors (1), der einen Kühlflüssigkeitskreislauf (13) für Kühlflüssigkeit des Motors (1) umfasst, wobei das Verfahren folgende Schritte umfasst:
- Unter-Druck-Setzen von Ladeluft an einem Turbolader (6),
- Abkühlen der unter Druck gesetzten Ladeluft durch einen Ladeluftkühler (10),
- Definieren eines Taupunktes (Td) der unter Druck gesetzten Ladeluft stromabwärts von dem Ladeluftkühler (10), und
- Anpassen der Temperatur der Ladeluft, die den Ladeluftkühler (10) verlässt, damit sie höher als der Taupunkt (Td) ist, indem die Temperatur der Kühlflüssigkeit, die in den Ladeluftkühler (10) eingespeist wird, geregelt wird,
- Abkühlen von Schmieröl für die Motorschmierung in einem Schmierölkreislauf (15) durch einen Schmierölkühler (14a, 14b),
**dadurch gekennzeichnet, dass**
- mindestens zwei Schmierölkühler (14a, 14b) bereitgestellt werden, die an dem Kühlflüssigkeitskreislauf (13) derart konfiguriert sind, dass ein Schmierölkühler (14a) mit einer stromaufwärtigen Position in Bezug auf den Ladeluftkühler (11) verbunden ist und ein Schmierölkühler (14b) mit einer stromabwärtigen Position in Bezug auf den Ladeluftkühler (10) verbunden ist, die Temperatur der Ladeluft nach dem Ladeluftkühler (10) höher als der entsprechende Taupunkt (Td) gehalten wird, und die Temperatur des Schmieröls innerhalb eines Betriebsbereichs (Tlo) gehalten wird, indem die Wärmeaustauschleistung der Schmierölkühler (14a, 14b) geregelt wird.

2. Verfahren nach Anspruch 1, wobei
- Ladeluft auf einer ersten Stufe durch einen Niederdruck-Turbolader (6) unter Druck gesetzt wird,
- die Ladeluft, die auf der ersten Stufe unter Druck gesetzt wird, durch einen Niederdruck-Ladeluftkühler (11, 111, 112) abgekühlt wird,
- ein erster Taupunkt (Td1) der unter Druck gesetzten Ladeluft stromabwärts von dem Niederdruck-Ladeluftkühler (11, 111, 112) definiert ist, und
- die Temperatur der Ladeluft, die den Niederdruck-Luftkühler (11, 111, 112) verlässt, angepasst wird, um höher zu sein als der erste Taupunkt, indem die Temperatur der Kühlflüssigkeit, die in den Niederdruck-Ladeluftkühler (11, 111, 112) eingespeist wird, geregelt wird,
- Ladeluft auf einer zweiten Stufe durch einen Hochdruck-Turbolader (9) unter Druck gesetzt wird,
- die Ladeluft, die auf der zweiten Stufe unter Druck gesetzt wird, durch einen Hochdruck-Ladeluftkühler (12) abgekühlt wird,
- ein zweiter Taupunkt (Td2) der unter Druck gesetzten Ladeluft stromabwärts von dem Hochdruck-Ladeluftkühler (12) definiert wird, und
- die Temperatur der Ladeluft, die den Hochdruck-Ladeluftkühler (12) verlässt, angepasst wird, um höher als der zweite Taupunkt (Td2) zu sein, indem die Temperatur der Kühlflüssigkeit, die in den Hochdruck-Ladeluftkühler (12) eingespeist wird, geregelt wird,
- mindestens zwei Schmierölkühler (14a, 14b) bereitgestellt werden, die an dem Kühlflüssigkeitskreislauf (13) konfiguriert sind, so dass ein Schmierölkühler (14a) mit einer stromaufwärtigen Position in Bezug auf den Hochdruck-Ladeluftkühler (12) verbunden ist und ein Schmierölkühler (14b) mit einer stromabwärtigen Position in Bezug auf den Niederdruck-Ladeluftkühler (11, 111, 112) verbunden ist, die Temperaturen der Ladeluft nach dem Niederdruck-Ladeluftkühler (11, 111, 112) und nach dem Hochdruck-Ladeluftkühler (12) höher als entsprechende Taupunkte (Td1, Td2) gehalten werden, und die Temperatur des Schmieröls innerhalb eines Betriebsbereichs (Tlo) gehalten wird, indem die Wärmetauschleistung der Schmierölkühler (14a, 14b) geregelt wird.

3. Verfahren nach Anspruch 1, **dadurch gekennzeichnet, dass** die Wärmetauschleistung auf die Schmierölkühler (14a, 14b) aufgeteilt wird.

4. Verfahren nach Anspruch 1 oder 2, **dadurch gekennzeichnet, dass** die Wärmetauschleistung mindestens eines der Schmierölkühler (14a, 14b) regelbar ist, indem der Schmierölfluss durch einen Umgehungskanal (14a1, 14b1) angepasst wird.

5. Verfahren nach Anspruch 1 bis 3, **dadurch gekennzeichnet, dass** die Wärmetauschleistung mindestens eines der Schmierölkühler (14a, 14b) regelbar ist, indem der Kühlflüssigkeitsfluss durch einen Umgehungskanal (14a2, 14b2) angepasst wird.

6. Verfahren nach Anspruch 1, **dadurch gekennzeichnet, dass** die Schmierölkühler (14a, 14b) in mindestens drei einfachen Alternativen konfigurierbar sind, die basierend auf anfänglichen Ladelufteigenschaften ausgewählt werden können, nämlich eine für kalte Ladeluft, eine für heiße und trockene Ladeluft und eine für heiße und feuchte Ladeluft.

7. Verfahren nach Anspruch 5, **dadurch gekennzeichnet, dass** die Alternative für kalte Ladeluft eine Konfiguration umfasst, bei der sich der Schmierölkühler (14b) in dem Kühlflüssigkeitskreislauf (13) in der Position stromabwärts von dem Niederdruck-Ladeluftkühler (11, 112) befindet, und wobei sich die überschüssige Hitze des Schmieröls auf die Kühlflüssigkeit überträgt.

8. Verfahren nach Anspruch 5, **dadurch gekennzeichnet, dass** der Niederdruck-Ladeluftkühler in zwei Stufen aufgeteilt ist.

9. Verfahren nach Anspruch 6, **dadurch gekennzeichnet, dass** die Alternative für heiße und trockene Ladeluft eine Konfiguration umfasst, in der sich der Schmierölkühler (14b) in dem Kühlflüssigkeitskreislauf (13) in der Position stromabwärts von einer Stufe Zwei des Niederdruck-Ladeluftkühlers (11, 112) befindet, wobei sich der größere Teil der überschüssigen Hitze des Schmieröls auf die Kühlflüssigkeit überträgt und sich der größere Teil der überschüssigen Niederdruck-Ladelufthitze auf einer Stufe Eins des Niederdruck-Ladeluftkühlers (111) auf den Kühlflüssigkeitskreislauf überträgt.

10. Verfahren nach Anspruch 6, **dadurch gekennzeichnet, dass** die Alternative für heiße und feuchte Ladeluft eine Konfiguration umfasst, in der sich ein Schmierölkühler (14b) in dem Kühlflüssigkeitskreislauf (13) in der Position stromabwärts von einer Stufe Zwei des Niederdruck-Ladeluftkühlers (112) befindet, wobei ein größerer Teil der überschüssigen Hitze des Schmieröls auf die Kühlflüssigkeit überträgt und ein kleinerer Teil der überschüssigen Hitze des Schmieröls auf die Kühlflüssigkeit an einem zweiten Schmierölkühler (14a) überträgt, der in dem Kühlflüssigkeitskreislauf (13) in einer Position stromaufwärts von dem Hochdruck-Ladeluftkühler (12) verbunden ist, und sich ein größerer Teil der überschüssigen Hitze der Niederdruck-Ladeluft auf einer Stufe Eins des Niederdruck-Ladeluftkühlers (111) auf den Kühlflüssigkeitskreislauf (13) überträgt.

11. Verfahren nach Anspruch 2, **dadurch gekennzeichnet, dass** der Taupunkt (Td, Td1, Td2) der Ladeluft auf der Grundlage der Messungen des Drucks, der Temperatur und der Feuchtigkeit der Ladeluft definiert wird.

## Revendications

1. Procédé de fonctionnement d'un moteur à combustion interne turbocompressé (1), qui comprend un circuit de liquide de refroidissement (13) pour le liquide de refroidissement du moteur (1), dans lequel procédé
- l'air de charge est pressurisé au niveau d'un turbocompresseur (6),
- l'air de charge pressurisé est refroidi par un refroidisseur d'air de charge (10),
- un point de rosée (Td) de l'air de charge pressurisé en aval du refroidisseur d'air de charge (10) est défini, et
- la température de l'air de charge quittant le refroidisseur d'air de charge (10) est ajustée afin d'être supérieure au point de rosée (Td)en commandant la température du liquide de refroidissement alimenté dans le refroidisseur d'air de charge (10),
- l'huile de lubrification pour la lubrification du moteur dans un circuit d'huile de lubrification (15) est refroidi par un refroidisseur d'huile de lubrification (14a, 14b),
**caractérisé en ce que**
- au moins deux refroidisseurs d'huile de lubrification (14a, 14b) sont prévus, qui sont configurés par rapport au circuit de liquide de refroidissement (13) de sorte qu'un refroidisseur d'huile de lubrification (14a) soit raccordé à une position en amont relativement au refroidisseur d'air de charge (11) et un refroidisseur d'huile de lubrification (14b) est raccordé à une position en amont relativement au refroidisseur d'air de charge (10), la température de l'air de charge après ledit refroidisseur d'air de charge (10) est gardée plus haute que le point de rosée correspondant (Td) et la température de l'huile de lubrification est gardée dans une plage de fonctionnement (Tlo) en commandant la puissance d'échange thermique desdits refroidisseurs d'huile de lubrification (14a, 14b).

2. Procédé selon la revendication 1, dans lequel
- l'air de charge est pressurisé à un premier étage par un turbocompresseur à basse pression (6),
- l'air de charge pressurisé au premier étage est refroidi par un refroidisseur d'air de charge à basse pression (11, 111, 112),
- un premier point de rosée (Td1) de l'air de charge pressurisé en aval du refroidisseur d'air de charge à basse pression (11, 111, 112) est défini, et
- la température de l'air de charge quittant le refroidisseur d'air de charge à basse pression (11, 111, 112) est ajusté afin d'être plus haut que le premier point de rosée en commandant la température du liquide de refroidissement alimenté dans le refroidisseur d'air de charge à basse pression (11, 111, 112),
- l'air de charge est pressurisé à un second étage par un turbocompresseur à haute pression (9),
- l'air de charge pressurisé au second étage est refroidi par un refroidisseur d'air de charge à haute pression (12),
- un second point de rosée (Td2) de l'air de charge pressurisé en aval du refroidisseur d'air de charge à haute pression (12) est défini, et
- la température de l'air de charge quittant le refroidisseur d'air de charge à haute pression (12) est ajustée afin d'être plus haute que le second point de rosée (Td2) en commandant la température du liquide de refroidissement alimenté dans le refroidisseur d'air de charge à haute pression (12),
- au moins deux refroidisseurs d'huile de lubrification (14a, 14b) sont prévus, qui sont configurés par rapport au circuit de liquide de refroidissement (13) de sorte qu'un refroidisseur d'huile de lubrification (14a) soit raccordé à une position en amont relativement au refroidisseur d'air de charge à haute pression (12) et un refroidisseur d'huile de lubrification (14b) soit raccordé à une position en aval relativement au refroidisseur d'air de charge à basse pression (11, 111, 112), les températures de l'air de charge après ledit refroidisseur d'air de charge à basse pression (11, 111, 112) et après ledit refroidisseur d'air de charge à haute pression (12) sont gardées plus hautes que les points de rosée correspondants (Td1, Td2) et la température de l'huile de lubrification est gardée dans une plage de fonctionnement (Tlo) en commandant la puissance d'échange thermique desdits refroidisseurs d'huile de lubrification (14a, 14b).

3. Procédé selon la revendication 1, **caractérisé en ce que** ladite puissance d'échange thermique est divisée entre lesdits refroidisseurs d'huile de lubrification (14a, 14b).

4. Procédé selon la revendication 1 ou 2, **caractérisé en ce que** la puissance d'échange thermique d'au moins un des refroidisseurs d'huile de lubrification (14a, 14b) peut être commandé en ajustant le flux d'huile de lubrification à travers un canal de dérivation (14a1, 14b1).

5. Procédé selon les revendications 1-3, **caractérisé en ce que** la puissance d'échange thermique d'au moins un des refroidisseurs d'huile de lubrification (14a, 14b) peut être commandé en ajustant le flux d'huile de lubrification à travers un canal de dérivation (14a2, 14b2).

6. Procédé selon la revendication 1, **caractérisé en ce que** les refroidisseurs d'huile de lubrification (14a, 14b) peuvent être configurés pour au moins trois alternatives de base qui peuvent être sélectionnées sur la base des propriétés d'air de charge initiales, une pour l'air de charge froid, une pour l'air de charge chaud et sec et une pour l'air de charge chaud et humide.

7. Procédé selon la revendication 5, **caractérisé en ce que** l'alternative à l'air de charge froid comprend une configuration où le refroidisseur d'air de lubrification (14b) est dans le circuit de liquide de refroidissement (13) à la position en aval du refroidisseur d'air de charge à basse pression (11, 112) et où l'excès de chaleur de l'huile de lubrification est transféré au liquide de refroidissement.

8. Procédé selon la revendication 5, **caractérisé en ce que** le refroidisseur d'air de charge à basse pression est divisé en deux étages.

9. Procédé selon la revendication 6, **caractérisé en ce que** l'alternative à l'air de charge chaud et sec comprend une configuration dans laquelle le refroidisseur d'huile de lubrification (14b) est dans le circuit de liquide de refroidissement (13) à la position en aval d'un étage deux du refroidisseur d'air de charge à basse pression (11, 112) où la majorité de l'excès de chaleur de l'huile de lubrification est transféré au liquide de refroidissement, la majorité de l'excès de chaleur de l'air de charge à basse pression est transférée à un étage un du refroidisseur d'air de charge à basse pression (111) vers le circuit de liquide de refroidissement.

10. Procédé selon la revendication 6, **caractérisé en ce que** l'alternative à l'air de charge chaud et humide comprend une configuration dans laquelle un refroidisseur d'huile de lubrification (14b) est dans le circuit de liquide de refroidissement (13) à la position en aval d'un étage deux du refroidisseur d'air de charge à basse pression (112) où une majeure partie de l'excès de chaleur de l'huile de lubrification est transféré au liquide de refroidissement et une mineure partie de l'excès de chaleur d'huile de lubrification est transférée au liquide de refroidissement au niveau d'un second refroidisseur d'huile de lubrification (14a), qui est raccordé dans le circuit de liquide de refroidissement (13) à une position en amont du refroidisseur d'air de charge à haute pression (12), une majeure partie de l'excès de chaleur de l'air de charge à basse pression est transférée à un étage un du refroidisseur d'air de charge à basse pression (111) vers le circuit de liquide de refroidissement (13).

11. Procédé selon la revendication 2, **caractérisé en ce que** le point de rosée (Td, Td1, Td2) de l'air de charge est défini sur la base des mesures de pression d'air de charge, température et humidité.
